# EUROPEAN PATENT APPLICATION

(11) **EP 4 749 711 A1**
(43) Date of publication of application: **27.05.2026**
(21) Application number: 25198446.4
(22) Date of filing: 27.08.2025
(51) Int. Cl.: H01M 4/36, H01M 4/38, H01M 4/04, H01M 4/62, H01M 4/13, H01M 4/139, H01M 4/66

(54) **MODIFIED POSITIVE ELECTRODE STRUCTURE, ZINC-VANADIUM BATTERY, AND MANUFACTURING METHODS THEREOF**

(30) Priority: 22.11.2024 TW 113145148
(71) Applicant: APh ePower Co., Ltd., Kaohsiung City 821 (TW)
(72) Inventor: TSAI, Shih Po-Ta, Kaohsiung City 821 (TW); CHEN, Wei-Ting, Kaohsiung City 821 (TW); WANG, Yi-Hsiu, Kaohsiung City 821 (TW); WU, Chien-Ting, Kaohsiung City 821 (TW)
(74) Representative: Viering, Jentschura & Partner mbB Patent- und Rechtsanwälte

(57) **Abstract**

A zinc-vanadium battery (1a) includes a modified positive electrode structure (including a positive electrode (10) and a first modified layer (12)), a separator (14), a negative electrode (16), and an aqueous electrolyte (18). The first modified layer (12) on the positive electrode (10) includes 70-95 parts by weight of vanadium-based material, 3-45 parts by weight of a conductive agent, and 3-45 parts by weight of a binder. The negative electrode (16) is on the separator (14) on the first modified layer (12). The positive electrode (10), the first modified layer (12), the separator (14), and the negative electrode (16) are in the aqueous electrolyte (18). In the X-ray diffraction patterns of the vanadium-based material measured by XRD using CuKα1 ray, an intensity ratio of a peak at 2θ=8°±1.0° over a peak at 2θ=20°±1.0° (denoted as I₈ and I₂₀, respectively) satisfies 0<I₈/I₂₀≤1.4. Furthermore, the modified positive electrode structure, a method of manufacturing the modified positive electrode structure, and a method (2a) of manufacturing the zinc-vanadium battery (1a) are provided.

## Description

### BACKGROUND

### Technical Field

The instant disclosure relates to a modified positive electrode structure and a manufacturing method thereof, particularly, a modified positive electrode structure comprising a modified vanadium-based material and a manufacturing method thereof. The instant disclosure also relates to a zinc-vanadium battery and a manufacturing method thereof, particularly, a zinc-vanadium battery comprising a modified positive electrode structure comprising a modified vanadium-based material and a manufacturing method thereof.

### Related Art

As known to the inventor, existing batteries that use zinc as the negative electrode have many structural and performance limitations. For example, the capacities per gram of such batteries using zinc as the negative electrode are about 100-200 mAh/g, and there is still room for improvement. In addition, in the initial stage of charging and discharging of such batteries using zinc as the negative electrode, because the discharge environment of the batteries is not completely balanced, the discharge reaction would also be unstable.

For another example, in such batteries using zinc as the negative electrode, the negative electrode will gradually accumulate galvanized products during use and the galvanized products are further developed into branch-like crystals (or dendrites) in the electrolyte; these dendrites will easily cause punctures and cause the batteries to fail.

### SUMMARY

To increase the gram capacity of a battery using zinc as a negative electrode, as known to the inventor, zinc perchlorate (Zn(ClO₄)₂) or other zinc salts with higher cost or stronger acidity are often used as electrolytes. However, although using the above material as the electrolyte may improve the discharge capacity of the batteries, the above material would cause the electrolyte to be acidic and easily trigger side reactions, thereby increasing the difficulty of battery manufacturing and leading to a relatively-high process cost for using the above material as the electrolyte.

In light of this, a modified positive electrode structure according to some embodiments of the instant disclosure is provided. The modified positive electrode structure comprises a positive electrode and a first modified layer. The positive electrode comprises aluminum covered by a carbon coating. The first modified layer is on the positive electrode. The first modified layer comprises a vanadium-based material, 70-95 parts by weight; a conductive agent, 3-45 parts by weight; and a binder, 3-45 parts by weight. In an X-ray diffraction pattern of the vanadium-based material measured by an X-ray diffractometer (XRD) using CuKα1 ray, with an intensity of a peak at 2θ=8°±1.0° denoted as I₈ and an intensity of a peak at 2θ=20°±1.0° denoted as I₂₀, a ratio of I₈ over I₂₀ (I₈/I₂₀) satisfies 0<I₈/I₂₀≤1.4.

Furthermore, a method of manufacturing the modified positive electrode structure according to some embodiments of the instant disclosure is also provided. The method comprises a first homogenization step, a drying step, a second homogenization step, and a coating step. The first homogenization step comprises mixing vanadium oxide, water, and hydrogen peroxide to conduct homogenization to obtain a vanadium-based homogeneous mixture. The drying step comprises freeze-drying or heat-drying the vanadium-based homogeneous mixture to obtain the vanadium-based material. The second homogenization step comprises mixing the vanadium-based material, the conductive agent, and the binder to conduct homogenization to obtain a first modified material. The coating step comprises coating the first modified material onto the positive electrode to form the first modified layer on the positive electrode, thereby obtaining the modified positive electrode structure.

In some embodiments, the modified positive electrode structure further comprises a second modified layer on the first modified layer. In some embodiments, the second modified layer comprises at least one selected from the group consisting of poly(3,4-ethylenedioxythiophene) (PEDOT) and polyaniline (PANI).

In addition, a method of manufacturing the zinc-vanadium battery according to some embodiments of the instant disclosure is also provided. The method comprises a first homogenization step, a drying step, a second homogenization step, a first coating step, and a second coating step. The first homogenization step comprises mixing vanadium oxide, water, and hydrogen peroxide to conduct homogenization to obtain a vanadium-based homogeneous mixture. The drying step comprises freeze-drying or heat-drying the vanadium-based homogeneous mixture to obtain the vanadium-based material. The second homogenization step comprises mixing the vanadium-based material, the conductive agent, and the binder to conduct homogenization to obtain a first modified material. The first coating step comprises coating the first modified material onto the positive electrode to form a first modified layer on the positive electrode. The second coating step comprises coating a second modified material onto the first modified layer to form a second modified layer on the first modified layer, and the second modified material comprises at least one selected from the group consisting of PEDOT and PANI, thereby obtaining the modified positive electrode structure.

Moreover, a zinc-vanadium battery according to some embodiments of the instant disclosure is further provided. The zinc-vanadium battery comprises a modified positive electrode structure (comprises a positive electrode and a first modified layer), a separator, a negative electrode, and an aqueous electrolyte. The positive electrode comprises aluminum covered by a carbon coating. The first modified layer is on the positive electrode. The first modified layer comprises a vanadium-based material, 70-95 parts by weight; a conductive agent, 3-45 parts by weight; and a binder, 3-45 parts by weight. The separator is on the first modified layer. The negative electrode comprises zinc. The negative electrode is on the separator. The positive electrode, the first modified layer, the separator, and the negative electrode are in the aqueous electrolyte. In an X-ray diffraction pattern of the vanadium-based material measured by an XRD using CuKα1 ray, with an intensity of a peak at 2θ=8°±1.0° denoted as I₈ and an intensity of a peak at 2θ=20°±1.0° denoted as I₂₀, a ratio of I₈ over I₂₀ (I₈/I₂₀) satisfies 0<I₈/I₂₀≤1.4.

In addition, a method of manufacturing the zinc-vanadium battery according to some embodiments of the instant disclosure is also provided. The method comprises a first homogenization step, a drying step, a second homogenization step, a coating step, and an assembling step. The first homogenization step comprises mixing vanadium oxide, water, and hydrogen peroxide to conduct homogenization to obtain a vanadium-based homogeneous mixture. The drying step comprises freeze-drying or heat-drying the vanadium-based homogeneous mixture to obtain the vanadium-based material. The second homogenization step comprises mixing the vanadium-based material, the conductive agent, and the binder to conduct homogenization to obtain a first modified material. The coating step comprises coating the first modified material onto the positive electrode to form the first modified layer on the positive electrode, thereby obtaining the modified positive electrode structure. The assembling step comprises sequentially assembling the separator and the negative electrode on the first modified layer and immersing the positive electrode, the first modified layer, the separator, and the negative electrode in the aqueous electrolyte to obtain the zinc-vanadium battery.

Moreover, a zinc-vanadium battery according to some embodiments of the instant disclosure is further provided. The zinc-vanadium battery comprises a modified positive electrode structure (comprises a positive electrode, a first modified layer, and a second modified layer), a separator, a negative electrode, and an aqueous electrolyte. The positive electrode comprises aluminum covered by a carbon coating. The first modified layer is on the positive electrode. The first modified layer comprises a vanadium-based material, 70-95 parts by weight; a conductive agent, 3-45 parts by weight; and a binder, 3-45 parts by weight. The second modified layer is on the first modified layer. The second modified layer comprises at least one selected from the group consisting of PEDOT and PANI. The separator is on the second modified layer. The negative electrode comprises zinc. The negative electrode is on the separator. The positive electrode, the first modified layer, the second modified layer, the separator, and the negative electrode are in the aqueous electrolyte. In an X-ray diffraction pattern of the vanadium-based material measured by an XRD using CuKα1 ray, with an intensity of a peak at 2θ=8°±1.0° denoted as I₈ and an intensity of a peak at 2θ=20°±1.0° denoted as I₂₀, a ratio of I₈ over I₂₀ (I₈/I₂₀) satisfies 0<I₈/I₂₀≤1.4.

In addition, a method of manufacturing the zinc-vanadium battery according to some embodiments of the instant disclosure is also provided. The method comprises a first homogenization step, a drying step, a second homogenization step, a first coating step, a second coating step, and an assembling step. The first homogenization step comprises mixing vanadium oxide, water, and hydrogen peroxide to conduct homogenization to obtain a vanadium-based homogeneous mixture. The drying step comprises freeze-drying or heat-drying the vanadium-based homogeneous mixture to obtain the vanadium-based material. The second homogenization step comprises mixing the vanadium-based material, the conductive agent, and the binder to conduct homogenization to obtain a first modified material. The first coating step comprises coating the first modified material onto the positive electrode to form the first modified layer on the positive electrode. The second coating step comprises coating the second modified material onto the first modified layer to form the second modified layer on the first modified layer, wherein the second modified material comprises at least one selected from the group consisting of PEDOT and PANI. The assembling step comprises sequentially assembling the separator and the negative electrode on the second modified layer and immersing the positive electrode, the first modified layer, the second modified layer, the separator, and the negative electrode in the aqueous electrolyte to obtain the zinc-vanadium battery.

### BRIEF DESCRIPTION OF THE DRAWINGS

The instant disclosure will become more fully understood from the detailed description given herein below for illustration only, and thus not limitative of the instant disclosure, wherein:
FIG. 1A illustrates a schematic structural view of a zinc-vanadium battery comprising a modified positive electrode structure according to some embodiments;
FIG. 1B illustrates a schematic structural view of a zinc-vanadium battery comprising a modified positive electrode structure according to some embodiments;
FIG. 2A illustrates a flowchart of a method of manufacturing the zinc-vanadium battery as shown in FIG. 1A according to some embodiments;
FIG. 2B illustrates a flowchart of a method of manufacturing the zinc-vanadium battery as shown in FIG. 1B according to some embodiments;
FIG. 3A is an X-ray diffraction pattern of a vanadium-based material of Comparative Example 1 (known to the inventor) measured by an XRD using CuKα1 ray;
FIG. 3B is an X-ray diffraction pattern of a vanadium-based material of Experimental Example 1 (according to some embodiments of the instant disclosure) measured by an XRD using CuKα1 ray;
FIG. 3C is an X-ray diffraction pattern of a vanadium-based material of Experimental Example 2 (according to some other embodiments of the instant disclosure) measured by an XRD using CuKα1 ray;
FIG. 4 is a graph comparing discharge capacities of a zinc-vanadium battery comprising the vanadium-based material of Comparative Example 2 (using a zinc foil as the positive electrode) and zinc-vanadium batteries comprising the vanadium-based material of Experimental Examples 3-8 (using an aluminum foil covered by a carbon coating as the positive electrode); and
FIG. 5 is a graph comparing average service life of batteries of a zinc-vanadium battery comprising the vanadium-based material of Comparative Example 2 (using a zinc foil as the positive electrode) and zinc-vanadium batteries comprising the vanadium-based material of Experimental Examples 3-8 (using an aluminum foil covered by a carbon coating as the positive electrode).

### DETAILED DESCRIPTION

The term "about" may vary in different technologies and within a range of deviations understood by a person of ordinary skill in the art. The term "about" in conjunction with a particular distance or dimension should be interpreted as not excluding slight deviations from the specified distance or dimension. For example, the term "about" may include a deviation of up to 10% of the specified amount, although the embodiments of the instant disclosure are not so limited thereto. The term "about" in connection with a numerical value x may mean x±5 or 10% of the specified value, although the embodiments of the instant disclosure are not limited thereto.

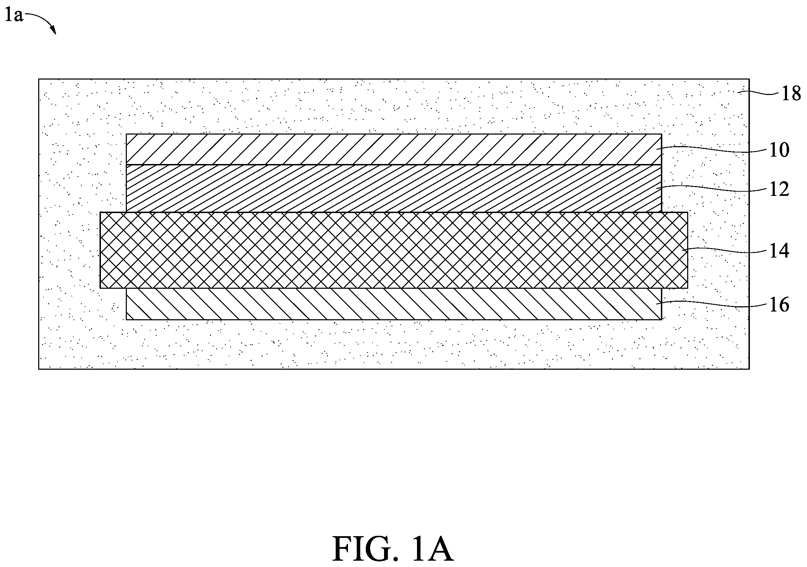

Please refer to FIG. 1A. FIG. 1A illustrates a schematic structural view of a zinc-vanadium battery 1a comprising a modified positive electrode structure according to some embodiments. In FIG. 1A, a modified positive electrode structure is provided, and the modified positive electrode structure comprises a positive electrode 10 and a first modified layer 12. The positive electrode 10 comprises aluminum (Al) covered by a carbon coating, and the first modified layer 12 is on the positive electrode 10. The first modified layer 12 comprises a vanadium-based material, a conductive agent, and a binder. In an X-ray diffraction pattern of the vanadium-based material measured by an X-ray diffractometer (XRD) using CuKα1 ray, with an intensity of a peak at 2θ=8°±1.0° denoted as I₈ and an intensity of a peak at 2θ=20°±1.0° denoted as I₂₀, a ratio of I₈ over I₂₀ (I₈/I₂₀) satisfies 0<I₈/I₂₀≤1.4 (which will be described in detail later). Furthermore, in FIG. 1A, a zinc-vanadium battery 1a is provided, and the zinc-vanadium battery 1a comprises the above-mentioned modified positive electrode structure (comprising the positive electrode 10 and the first modified layer 12), a separator 14, a negative electrode 16, and an aqueous electrolyte 18. The separator 14 is on the first modified layer 12, and the negative electrode 16 comprises zinc (Zn) and is on the separator 14. The positive electrode 10, the first modified layer 12, the separator 14, and the negative electrode 16 are in the aqueous electrolyte 18. As a result, as compared to the zinc-vanadium battery known to the inventor (i.e., the zinc-vanadium battery without the above-mentioned modified positive electrode structure), the zinc-vanadium battery 1a comprising the above-mentioned modified positive electrode structure can have more stable charging and discharging performance, higher battery power, and longer service life (which will be described in detail later).

The positive electrode 10 may be a metal foil or a metal material with a porous structure (e.g., a metal mesh). The positive electrode 10 may be a metal foil covered by a carbon coating (e.g., an aluminum foil covered by a carbon coating, that is, the aluminum covered by a carbon coating used herein), an anodic aluminum oxide (AAO), or a metal material having a porous structure (e.g., an aluminum mesh covered by a carbon coating with the mesh size of the aluminum mesh being about 100-500 nm). The thickness of the positive electrode 10 may be, but is not limited to, 5-50 µm, or, for example, about 10-50 µm. The thickness may be adjusted based on various requirements such as physical properties (e.g., tensile strength). The thickness of the carbon coating is about 1-5 µm. In some embodiments, the positive electrode 10 is a commercially available metal foil with a carbon coating, such as an aluminum foil (with a thickness of about 20 µm) covered by a carbon coating (with a thickness of about 1-5 µm).

The first modified layer 12 comprises the vanadium-based material (70-95 parts by weight), the conductive agent (3-45 parts by weight), and the binder (3-45 parts by weight). The total weight of the vanadium-based material, the conductive agent, and the binder is not limited to be equal to 100 parts by weight, and can be adjusted to be less than or greater than 100 parts by weight according to different demands. In some embodiments, the weights of the vanadium-based material, the conductive agent, and the binder are 80 parts by weight, 10 parts by weight, and 10 parts by weight, respectively; or, 90 parts by weight, 5 parts by weight, and 5 parts by weight, respectively; or, 92 parts by weight, 5 parts by weight, and 3 parts by weight, respectively; but the instant disclosure is not limited thereto. When the weights of the vanadium-based material, the conductive agent, and the binder are not added according to the aforementioned weight proportion (denoted as parts by weight), even if the modified positive electrode structure comprises the vanadium-based material, at least one of the charging and discharging performance, the battery power, and the service life of the zinc-vanadium battery manufactured according to the weight proportion cannot be obviously superior to the performance of the zinc-vanadium battery known to the inventor (i.e., the zinc-vanadium battery without the above-mentioned modified positive electrode structure). The thickness of the first modified layer 12 may be, but is not limited to, 50-90 µm.

A ratio of I₈ over I₂₀ (I₈/I₂₀) of the vanadium-based material satisfies 0<I₈/I₂₀≤1.4 (which will be described in detail later) where an X-ray diffraction pattern of the vanadium-based material measured by an X-ray diffractometer (XRD) using CuKα1 ray, with an intensity of a peak at 2θ=8°±1.0° denoted as I₈ and an intensity of a peak at 2θ=20°±1.0° denoted as I₂₀ (which will be described in detail later). In some embodiments, I₈/I₂₀ satisfies 1.1≤I₈/I₂₀≤1.4. In some embodiments, I₈/I₂₀ satisfies 1.13<I₈/I₂₀≤1.35. In some embodiments, I₈/I₂₀ is 0.1, 0.2, 0.3, 0.4, 0.5, 0.6, 0.7, 0.8, 0.9, 1.0, 1.1, 1.2, 1.3, 1.4, or any value between 0 and any of the above values, or any value between any two of the above values. In some embodiments, I₈ represents the intensity of a peak at 2θ=8°±0.5°, and I₂₀ represents the intensity of a peak at 2θ=20°±0.5°. When the ratio (i.e., I₈/I₂₀) of the vanadium-based material does not fall within the above range (e.g., less than the lower limit of the above range or greater than the upper limit of the above range), even if the modified positive electrode structure comprises the vanadium-based material, at least one of the charging and discharging performance, the battery power, and the service life of the zinc-vanadium battery manufactured according to the weight proportion cannot be obviously superior to the performance of the zinc-vanadium battery known to the inventor (i.e., the zinc-vanadium battery without the above-mentioned modified positive electrode structure).

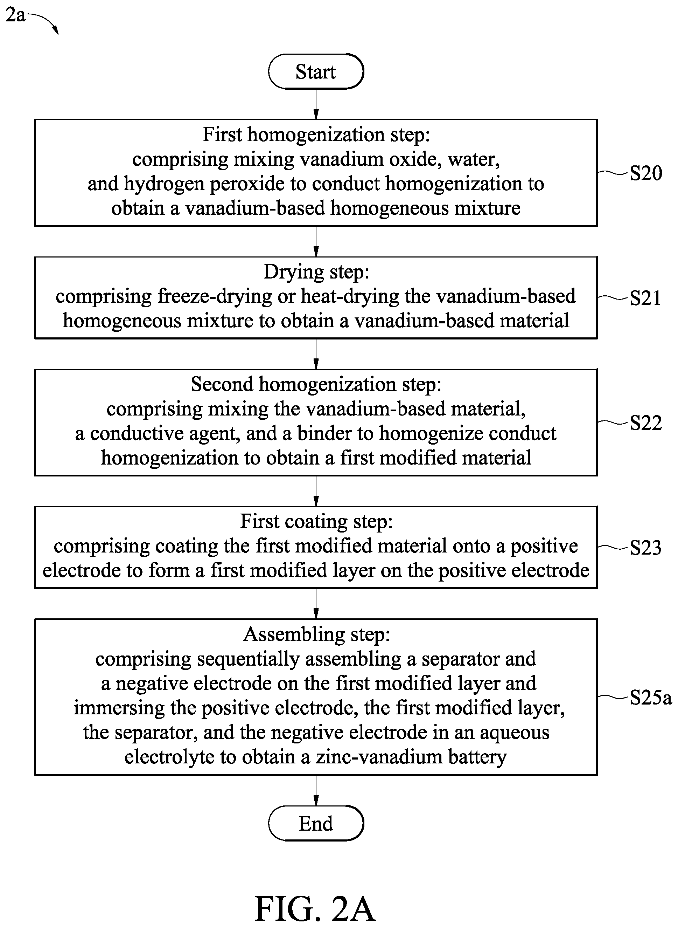

Please refer to FIG. 2A. FIG. 2A illustrates a flowchart of a method 2a of manufacturing a zinc-vanadium battery 1a as shown in FIG. 1A according to some embodiments. The vanadium-based material may be a vanadium-based material prepared through, for example, some of the steps of the method 2a shown in FIG. 2A; for example, through step S20 or steps S20-S21 of FIG. 2A (which will be described in detail later). Therefore, the vanadium-based material may comprise the initial material used in step S20 of FIG. 2A, that is, vanadium oxide or derivatives of the vanadium oxide, and the ratio of I₈ over I₂₀ (I₈/I₂₀) of the vanadium-based material also satisfies the aforementioned relationship (e.g., 0<I₈/I₂₀≤1.4). The vanadium oxide may comprise any compound represented by the chemical formula VₓO_{y} (where x and y are both positive numbers), and impurities which do not affect the physicochemical properties of the vanadium oxide is not particularly excluded and may be doped in the vanadium oxide. For example, the vanadium oxide or derivatives of the vanadium oxide may be selected from the group consisting of V₂O₅, VO₂, NaV₃O₈·1.5H₂O, LiV₃O₈, Na₂V₆O₁₆·1.63H₂O, Fe₅V₁₅O₃₉(OH)₉·9H₂O, Zn₃V₂O₇(OH)₂·2H₂O, and derivatives thereof, or the vanadium oxide or derivatives of the vanadium oxide may be a mixture of at least two selected from the group consisting of V₂O₅, VO₂, NaV₃O₈·1.5H₂O, LiV₃O₈, Na₂V₆O₁₆·1.63H₂O, Fe₅V₁₅O₃₉(OH)₉·9H₂O, Zn₃V₂O₇(OH)₂·2H₂O, and derivatives thereof.

The conductive agent may comprise at least one selected from the group consisting of conductive carbon black and carbon nanotube (CNT). The conductive carbon black may be any commercially available conductive carbon black, for example, at least one selected from the group consisting of acetylene black, Ketjenblack, Super P, XC-72, N220, N330, N550, S204, FW200, VGCF, and KS6. In other words, the conductive carbon black may be selected from the group consisting of acetylene black, Ketjenblack, Super P, XC-72, N220, N330, N550, S204, FW200, VGCF, and KS6, or the conductive carbon black may be a mixture of at least two selected from the group consisting of acetylene black, Ketjenblack, Super P, XC-72, N220, N330, N550, S204, FW200, VGCF, and KS6. In some embodiments, the conductive carbon black comprises at least one selected from the group consisting of Super P and a mixture of Super P. The CNTs may be various commercially available CNTs, for example, at least one selected from the group consisting of single-walled carbon nanotube (SCNT) and multi-walled carbon nanotube (MCNT). In other words, the CNT may be selected from the group consisting of SCNT and MCNT, or the CNT may be a mixture of at least two selected from the group consisting of SCNT and MCNT.

The binder may comprise at least one selected from the group consisting of polyvinylidene fluoride (PVDF), polytetrafluoroethylene (PTFE), carboxymethyl cellulose (CMC), styrene-butadiene rubber (SBR), and polyimide (PI). In other words, the binder may be selected from the group consisting of PVDF, PTFE, CMC, SBR, and PI, or the binder may be a mixture of at least two selected from the group consisting of PVDF, PTFE, CMC, SBR, and PI. In some embodiments, the binder comprises at least one selected from the group consisting of PVDF and PTFE. In some embodiments, the binder comprises at least one selected from the group consisting of PVDF and a mixture of PVDF.

Please still refer to FIG. 1A. The separator 14 may comprise at least one selected from the group consisting of cellulose, synthetic fiber, and glass fiber. The synthetic fiber may be, for example, polyester fiber or polyaramid fiber. In some embodiments, the separator 14 comprises at least one selected from the group consisting of cellulose and glass fiber. In some embodiments, the compositions of the separator 14 may vary according to different aqueous electrolytes 18 (which will be described in detail later). The thickness of the separator 14 may be, but is not limited to, 30-400 µm.

Please still refer to FIG. 1A. The negative electrode 16 may be a metal foil or a metal material with a porous structure (e.g., a metal mesh). The negative electrode 16 may be a metal foil comprising zinc (e.g., a zinc foil) or a metal material having a porous structure (e.g., a zinc mesh with the mesh size thereof not exceeding 1 µm). The purity of the zinc is, for example, 95 wt % or more with respect to the metal foil or the metal material. The thickness of the negative electrode 16 may be, but is not limited to, 10-50 µm, or, for example, about 20-50 µm. In some embodiments, the negative electrode 16 is a metal foil comprising zinc (e.g., a zinc foil), and the positive electrode 10 is a metal foil covered by a carbon coating (e.g., an aluminum foil covered by a carbon coating).

Please still refer to FIG. 1A. The aqueous electrolyte 18 may be a solution comprising organic salt or inorganic salt that is soluble in water and can release metal ions that are identical to the metal contained in the negative electrode 16. For example, if a metal foil containing zinc is used as the negative electrode 16, the aqueous electrolyte 18 should be selected to contain an organic salt or an inorganic salt that can release zinc ions (which is identical to the metal ions (i.e., zinc ions) contained in the negative electrode 16) after being dissolved in water. In this case, the aqueous electrolyte 18 may, for example, comprise at least one selected from the group consisting of zinc triflate (Zn(OTf)₂) and zinc sulfate (ZnSO₄).

In some embodiments, the aqueous electrolyte 18 is an aqueous solution comprising Zn(OTf)₂ and water, and the weight ratio of Zn(OTf)₂ over water may be, but is not limited to, between 1: 1 and 3:7, such as about 4:6 or 42.28:57.72. In some embodiments, the aqueous electrolyte 18 is an aqueous solution comprising water, Zn(OTf)₂, and lithium bis(trifluoromethanesulfonyl)imide (LiTFSI, LiN(CF₃SO₂)₂), and the weight ratio of water, Zn(OTf)₂, and LiN(CF₃SO₂)₂ may be, but is not limited to, 1.5:1:0.01-0.30 or 1.4:1:0.01-0.28, such as about 1.5:1:0.05 or 1.4:1:0.05. In some embodiments, the aqueous electrolyte 18 is an aqueous solution comprising Zn(OTf)₂. In another some embodiments, the aqueous electrolyte 18 is an aqueous solution comprising 1-5M Zn(OTf)₂. For example, the 1-5M Zn(OTf)₂ is selected as 2M Zn(OTf)₂. In yet another some embodiments, the aqueous electrolyte 18 is an aqueous solution comprising Zn(OTf)₂ and 0.1-1M LiN(CF₃SO₂)₂. In yet another some embodiments, the aqueous electrolyte 18 is an aqueous solution comprising 2M Zn(OTf)₂ and 0.1-1M LiN(CF₃SO₂)₂. The 0.1-1M LiN(CF₃SO₂)₂ may be selected from the group consisting of 0.125M, 0.25M, 0.5M, and 0.75M LiN(CF₃SO₂)₂; for example, the LiN(CF₃SO₂)₂ is selected as 0.125M LiN(CF₃SO₂)₂.

In some embodiments, the aqueous electrolyte 18 is an aqueous solution comprising ZnSO₄ and water, and the weight ratio of ZnSO₄ over water may be, but is not limited to, between 1:1 and 3:7, such as about 4:6 or 57.72:42.28. In some embodiments, the aqueous electrolyte 18 is an aqueous solution comprising water, ZnSO₄, and ammonium sulfate ((NH₄)₂SO₄), and the weight ratio of water, ZnSO₄, and (NH₄)₂SO₄ may be, but is not limited to, 1.5:1:0.03-0.18 or 1.4:1:0.02-0.17, such as about 1.5:1:0.05 or 1.4:1:0.05. In some embodiments, the aqueous electrolyte 18 is an aqueous solution comprising ZnSO₄. In another some embodiments, the aqueous electrolyte 18 is an aqueous solution comprising 1-0.5-3M ZnSO₄. For example, the 0.5-3M ZnSO₄ is selected from the group consisting of 0.5M, 1M, 2M, 2,5M, and 3M ZnSO₄. In yet another some embodiments, the aqueous electrolyte 18 is an aqueous solution comprising ZnSO₄ and 0.1-0.3M (NH₄)₂SO₄. In yet another some embodiments, the aqueous electrolyte 18 is an aqueous solution comprising 2M ZnSO₄ and 0.1-0.3M (NH₄)₂SO₄. The 0.1-0.3M (NH₄)₂SO₄ may be selected from the group consisting of 0.125M and 0.25M (NH₄)₂SO₄; for example, the (NH₄)₂SO₄ is selected as 0.25M (NH₄)₂SO₄.

In some embodiments, the separator 14 has corresponding usage combinations according to different aqueous electrolytes 18. For example, when the aqueous electrolyte 18 is an aqueous solution comprising water and Zn(OTf)₂, the separator 14 may be correspondingly selected as the separator comprising glass fiber. For another example, when the aqueous electrolyte 18 is an aqueous solution comprising water and ZnSO₄, the separator 14 may be correspondingly selected as the separator comprising cellulose. Therefore, in some embodiments, compared with a zinc-vanadium battery not using the above-mentioned specific combination of the separator 14 and the aqueous electrolyte 18, the zinc-vanadium battery 1a comprising the above-mentioned specific combination of the separator 14 and the aqueous electrolyte 18 can have a relatively better battery performance.

Next, please refer to FIG. 2A. FIG. 1A is used herein for auxiliary explanation, and FIG. 2A illustrates a method for manufacturing a modified positive electrode structure and illustrates a method 2a of manufacturing a zinc-vanadium battery 1a comprising the modified positive electrode structure. It should be noted that, before the zinc-vanadium battery 1a comprising the modified positive electrode structure is manufactured, the modified positive electrode structure should be manufactured first; in other words, the method of manufacturing the modified positive electrode structure may be included in the method 2a of manufacturing the zinc-vanadium battery 1a comprising the modified positive electrode structure. For example, the method of manufacturing the modified positive electrode structure may be steps S20-S23 of the method 2a. Further, the method 2a of manufacturing the zinc-vanadium battery 1a comprising the modified positive electrode structure may be assembling the modified positive electrode structure, the separator 14, and the negative electrode 16 obtained through the steps S20-S23 with each other according to step S25a, and immersing the assembled structure in an aqueous electrolyte 18 to achieve the manufacturing of the zinc-vanadium battery 1a.

Specifically, please still refer to FIG. 2A, where a method 2a of manufacturing a zinc-vanadium battery 1a comprising the modified positive electrode structure may comprise steps S20-S23 and S25a.

Step S20 is a first homogenization step, and step S20 comprises mixing vanadium oxide, water, and hydrogen peroxide to conduct homogenization to obtain a vanadium-based homogeneous mixture. For example, step S20 is conducted by homogenizing (e.g., stirring) the vanadium oxide, the water, and the hydrogen peroxide in a weight ratio of 7:120:2-12 in sequence for 12-15 hours under a normal condition to obtain the vanadium-based homogeneous mixture. The normal condition may be a process environment with a humidity of 40% or less. In some embodiments, step S20 is conducted at room temperature and pressure. In some embodiments, the weights of the vanadium oxide, the water, and the hydrogen peroxide are sequentially 35 g, 600 g, and 10 g (i.e., 7:120:2), or 35 g, 600 g, and 20 g (i.e., 7:120:4), or 35 g, 600 g, and 60 g (i.e., 7:120:12); that is, the weight ratio of water over hydrogen peroxide may be 60:1, 30:1 or 10:1. The implementation of the vanadium oxide may be referred to the above description and will not be further described in detail herein. Water and hydrogen peroxide may be commercially available or laboratory-grade water and hydrogen peroxide that can be obtained by a person of ordinary skill in the art, which are not limited herein. In step S20, since the crystals of vanadium oxide itself will form stacked layered structures, the interlayer spacing of the layered structures will be stretched and further expanded through the reaction of hydrogen peroxide and vanadium oxide. Furthermore, because the interlayer spacing between the layered structures is expanded, a larger charge storage can be provided during the subsequent charging and discharging process of the zinc-vanadium battery 1a, and the difficulty of ion exchange between the layered structures can also be reduced. Therefore, in some embodiments, the problem of battery power decay of the zinc-vanadium battery 1a after multiple charging and discharging cycles can be avoided, thereby extending the service life of the zinc-vanadium battery 1a.

Step S21 is a drying step, and step S21 comprises further freeze-drying or heat-drying the vanadium-based homogeneous mixture obtained in step S20 to obtain a vanadium-based material.

In some embodiments, the heat-drying in step S21 is conducted by first removing the solvent contained in the vanadium-based homogeneous mixture obtained in step S20, and then placing the vanadium-based homogeneous mixture in an oven to dry under vacuum and high temperature to obtain the vanadium-based material. The step of removing the solvent contained in the vanadium-based homogeneous mixture may be conducted through a filtration step, a concentration step, or both the filtration step and the concentration step. The filtration step may be conducted, for example, by vacuum filtration, gravity filtration, pressure filtration, or centrifugal filtration, which is not limited herein; and the concentration step may be conducted, for example, by cyclotron concentration or reduced pressure concentration, which is not limited herein. In some embodiments, the step of drying the vanadium-based material under vacuum and high temperature may be conducted by heating the environment of the vanadium-based material to about 50-70°C. (e.g., about 60°C) and maintaining the temperature overnight. In addition, in some embodiments, in step S20, an organic solvent (e.g., N-methyl-2-pyrrolidone (NMP)) may be added to the vanadium-based material to improve the vacuum filtration efficiency through the substitution between NMP and water, and then step S21 is conducted, where the vanadium-based material is dried, for example, by the aforementioned heat-drying, to obtain the vanadium-based material. In some embodiments, the vanadium-based material obtained by the aforementioned heat-drying may be further appropriately ground to further refine the agglomerated vanadium-based material after the drying.

In some embodiments, the freeze-drying in step S21 refers to freezing the vanadium-based homogeneous mixture obtained in step S20 to a frozen state before the heat-drying, and then evacuating and heating the mixture so that water molecules in the vanadium-based homogeneous mixture can be sublimated directly from a solid state. Therefore, in some embodiments, through the freeze-drying, agglomeration of the dried vanadium-based material can be avoided, so that softer dried powders can be provided.

After completing step S21, the obtained vanadium-based material may be further measured by an X-ray diffractometer (XRD) using CuKα1 ray. In the X-ray diffraction pattern of the vanadium-based material, a peak with an intensity denoted as I₈ appears at the position of 2θ=8°±1.0°, a peak with an intensity denoted as I₂₀ appears at the position of 2θ=20°±1.0°, and a ratio of I₈ over I₂₀ (I₈/I₂₀) satisfies 0<I₈/I₂₀≤1.4 (e.g., 1.1≤I₈/I₂₀≤1.4). In some embodiments, through the above XRD measurement, whether the vanadium-based material manufactured in step S21 can be applied in the subsequent manufacturing of the zinc-vanadium battery 1 can be confirmed earlier, thereby reducing manufacturing costs.

Step S22 is a second homogenization step, and the step S22 comprises mixing the vanadium-based material obtained by step S21, the conductive agent, and the binder to conduct homogenization to obtain a first modified material. For example, step S22 is conducted by homogenizing (e.g., stirring) the vanadium-based material, the conductive agent, and the binder in a weight ratio of 70-95:3-45:3-45 for 1-15 hours under a normal condition to obtain the first modified material. The normal condition may be a process environment with a humidity of 40% or less. In some embodiments, step S22 is conducted at room temperature and pressure. In some embodiments, the weights of the vanadium-based material, the conductive agent, and the binder are sequentially 70-95 parts by weight, 3-45 parts by weight, and 3-45 parts by weight; for example, the weights of the vanadium-based material, the conductive agent, and the binder are sequentially 80 parts by weight, 10 parts by weight, and 10 parts by weight. The implementations of the vanadium-based material, the conductive agent, and the binder may be referred to the above descriptions and will not be further described in detail herein. In addition, in some embodiments, in step S22, the vanadium-based material, the conductive agent, and the binder may be added to an organic solvent (e.g., NMP) for homogenization so that the vanadium-based material, the conductive agent, and the binder may be more fully and evenly dispersed in the organic solvent, thereby avoiding agglomeration and particles. In some embodiments, the first modified material obtained in step S22 needs to meet the particle size requirement; for example, the particle size of the first modified material needs to be less than 60 µm.

Step S23 is a first coating step, and step S23 comprises coating the first modified material obtained by step S22 onto the positive electrode 10 (shown in FIG. 1A) to form the first modified layer 12 on the positive electrode 10. For example, the first modified material may be coated on the positive electrode 10 by a frame coating member. In some embodiments, after coating the first modified material on the positive electrode 10, the first modified material and the positive electrode 10 are further subjected to a drying step to complete the first modified layer 12; for example, the first modified layer 12 on the positive electrode 10 are dried at about 80-100°C (e.g., about 100°C) for about 1 hour to complete step S23. The implementations of the positive electrode 10 and the first modified layer 12 may be referred to the above descriptions and will not be further described in detail herein.

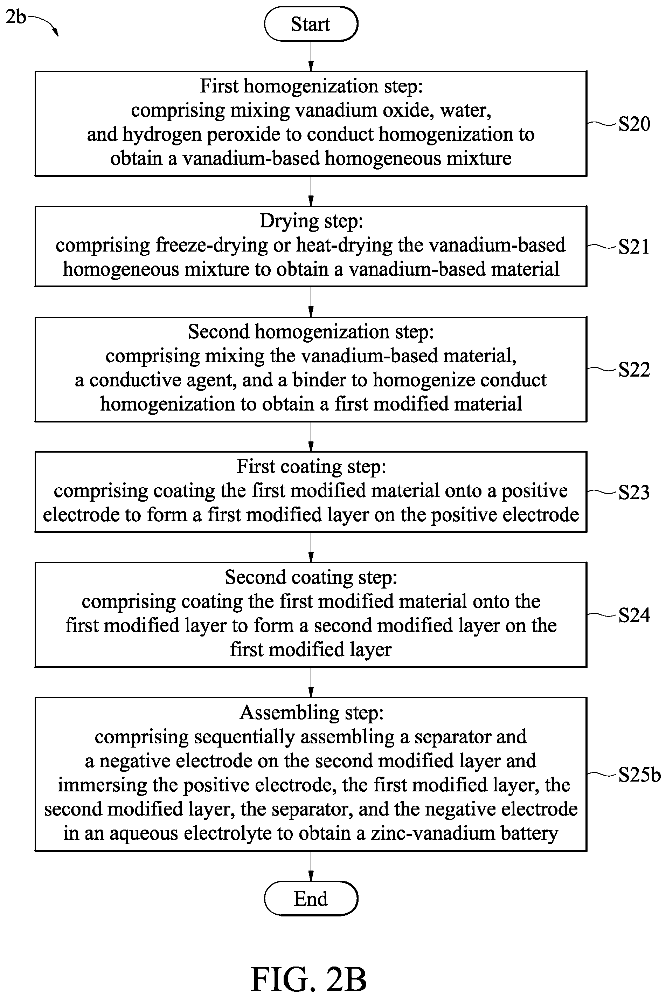

After completing step S23 of FIG. 2A, the obtained first modified layer 12 on the positive electrode 10 can be used as the aforementioned modified positive electrode structure. In some embodiments, step S25a is further conducted on the obtained modified positive electrode structure according to FIG. 2A, so that a zinc-vanadium battery 1a can be further obtained. Alternatively, in some embodiments, step S24 and step S25b are further conducted on the first modified layer 12 on the positive electrode 10 according to FIG. 2B, so that a zinc-vanadium battery 1b can be further obtained (which will be described in detail later).

Please still refer to FIG. 2A. Step S25a is an assembling step, and step S25a comprises sequentially assembling the separator 14 and the negative electrode 16 on the first modified layer 12 and immersing the positive electrode 10, the first modified layer 12, the separator 14, and the negative electrode 16 in the aqueous electrolyte 18 (shown in FIG. 1A) to obtain the zinc-vanadium battery 1a. For example, the modified positive electrode structure (comprising the positive electrode 10 and the first modified layer 12), the separator 14, and the negative electrode 16 are assembled in sequence and packaged by a hydraulic press according to the specifications of a CR2032 button cell to obtain the final zinc-vanadium battery 1a. The implementations of the positive electrode 10, the first modified layer 12, the separator 14, the negative electrode 16, and the aqueous electrolyte 18 may be referred to the above descriptions and will not be further described in detail herein. In some embodiments, the thickness of the positive electrode 10 is about 5-50 µm, the thickness of the first modified layer 12 is about 70-90 µm, the thickness of the separator 14 is about 30-400 µm, and the thickness of the negative electrode 16 is about 10-50 µm.

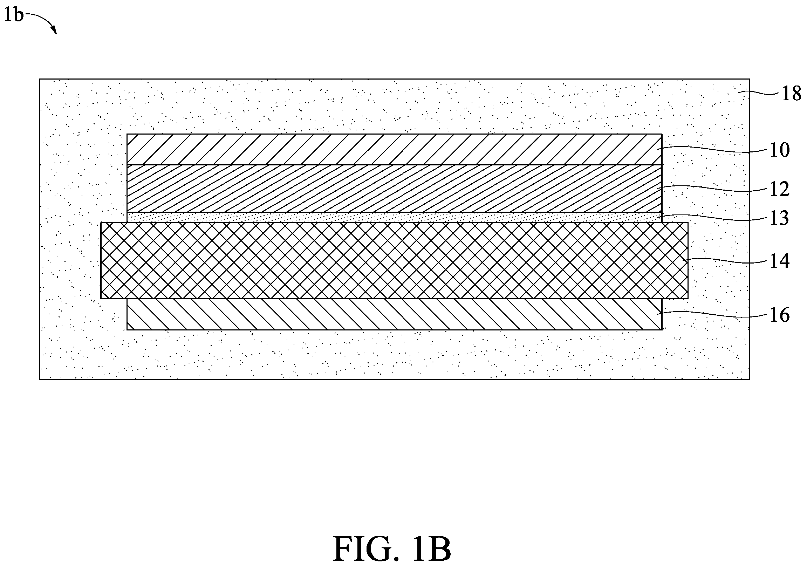

Please refer to FIG. 1B. FIG. 1B illustrates a schematic structural view of a zinc-vanadium battery 1b comprising a modified positive electrode structure according to some embodiments. The zinc-vanadium battery 1b shown in FIG. 1B is substantially the same as the zinc-vanadium battery 1a shown in FIG. 1A, and the main difference between the two zinc-vanadium batteries 1a, 1b lies in, for example, that the zinc-vanadium battery 1b shown in FIG. 1B further comprises a second modified layer 13 on the first modified layer 12, and the second modified layer 13 comprises at least one selected from the group consisting of poly(3,4-ethylenedioxythiophene) (PEDOT) and polyaniline (PANI). Hence, the zinc-vanadium battery 1b shown in FIG. 1B comprises the modified positive electrode structure (comprising the positive electrode 10, the first modified layer 12, and the second modified layer 13), the separator 14, the negative electrode 16, and the aqueous electrolyte 18. The first modified layer 12 is on the positive electrode 10. The first modified layer 12 comprises a vanadium-based material, 70-95 parts by weight; a conductive agent, 3-45 parts by weight; and a binder, 3-45 parts by weight. The separator 14 is on the second modified layer 13. The negative electrode 16 comprises zinc. The negative electrode 16 is on the separator 14. The positive electrode 10, the first modified layer 12, the second modified layer 13, the separator 14, and the negative electrode 16 are in the aqueous electrolyte 18. As a result, as compared to the zinc-vanadium battery known to the inventor (i.e., the zinc-vanadium battery without the above-mentioned modified positive electrode structure), the zinc-vanadium battery 1b comprising the above-mentioned modified positive electrode structure can have more stable charging and discharging performance, higher battery power, and longer service life (which will be described in detail later).

The implementations of the positive electrode 10 and the first modified layer 12 shown in FIG. 1B may be referred to the above description and will not be further described in detail herein.

Please refer to FIG. 2B. FIG. 2B illustrates a flowchart of a method 2b of manufacturing the zinc-vanadium battery 1b as shown in FIG. 1B according to some embodiments. The method 2b shown in FIG. 2B is substantially the same as the method 2a shown in FIG. 2A, and the main difference between the two methods 2a, 2b lies in, for example, that the method 2b shown in FIG. 2B further comprises step S24, and step S25a shown in FIG. 2A is replaced by step S25b; except for this, steps S20-S23 shown in FIG. 2B may be substantially the same as steps S20-S23 shown in FIG. 2A. Hence, the vanadium-based material may be the vanadium-based material manufactured and obtained, for example, by part of steps of the method 2a shown in FIG. 2A or the method 2b shown in FIG. 2B. For example, the vanadium-based material is obtained through step S20 or steps S20-S21 of FIG. 2A or FIG. 2B, and the implementation of manufacturing the vanadium-based material may be referred to the above description and will not be further described in detail herein. The implementations of the conductive agent and the binder shown in steps S22 of FIG. 1B and FIG. 2B may be referred to the above description and will not be further described in detail herein.

Please refer to FIG. 1B. The second modified layer 13 shown in FIG. 1B may comprise at least one selected from the group consisting of PEDOT and PANI. In some embodiments, the second modified layer 13 may comprise at least one selected from the group consisting of PEDOT and derivatives of PEDOT, such as PEDOT:(polystyrene sulfonate) (i.e., PEDOT:PSS). The thickness of the second modified layer 13 may be, but is not limited to, 5-15 µm; for example, about 10 µm.

The implementations of the separator 14, the negative electrode 16, and the aqueous electrolyte 18 shown in FIG. 1B may be referred to the above description and will not be further described in detail herein.

Next, please refer to FIG. 2B. FIG. 1B is used herein for auxiliary explanation, and FIG. 2B illustrates a method for manufacturing a modified positive electrode structure and illustrates a method 2b of manufacturing a zinc-vanadium battery 1b comprising the modified positive electrode structure. It should be noted that, before the zinc-vanadium battery 1b comprising the modified positive electrode structure is manufactured, the modified positive electrode structure should be manufactured first; in other words, the method of manufacturing the modified positive electrode structure may be included in the method 2b of manufacturing the zinc-vanadium battery 1b comprising the modified positive electrode structure. For example, the method of manufacturing the modified positive electrode structure may be steps S20-S24 of the method 2b. Further, the method 2b of manufacturing the zinc-vanadium battery 1b comprising the modified positive electrode structure may be assembling the modified positive electrode structure, the separator 14, and the negative electrode 16 obtained through the steps S20-S24 with each other according to step S25b, and immersing the assembled structure in an aqueous electrolyte 18 to achieve the manufacturing of the zinc-vanadium battery 1b.

Specifically, please still refer to FIG. 2B, where a method 2b of manufacturing a zinc-vanadium battery 1b comprising the modified positive electrode structure may comprise steps S20-S24 and S25b.

The implementations of the step S20 (i.e., the first homogenization step), the step S21 (i.e., the drying step), the step S22 (i.e., the second homogenization step), and the step S23 (i.e., the first coating step) shown in FIG. 2B may be referred to the above implementations of the steps S20-S23 shown in FIG. 2A and will not be further described in detail herein.

Step S24 shown in FIG. 2B is a second coating step, and step S24 comprises coating the second modified material onto the first modified layer 12 (shown in FIG. 1B) to form the second modified layer 13 on the first modified layer 12. For example, the second modified material may be coated on the positive electrode 10 by a frame coating member. In some embodiments, after coating the second modified material on the first modified layer 12, the second modified material, the first modified layer 12, and the positive electrode 10 are further subjected to a drying step to complete the second modified layer 13; for example, the second modified layer 13 on the first modified layer 12, the first modified layer 12, and the positive electrode 10 are dried at about 80-100°C (e.g., about 100°C) for about 1 hour to complete step S24. The implementations of the positive electrode 10, the first modified layer 12, and the second modified layer 13 may be referred to the above descriptions and will not be further described in detail herein.

After completing step S24 of FIG. 2B, the obtained first modified layer 12 and second modified layer 13 on the positive electrode 10 can be used as the aforementioned modified positive electrode structure. In some embodiments, step S25b is further conducted on the obtained modified positive electrode structure according to FIG. 2B, so that a zinc-vanadium battery 1b can be further obtained.

Please still refer to FIG. 2B. Step S25b is an assembling step, and step S25b comprises sequentially assembling the separator 14 and the negative electrode 16 on the second modified layer 13 and immersing the positive electrode 10, the first modified layer 12, the second modified layer 13, the separator 14, and the negative electrode 16 in the aqueous electrolyte 18 (shown in FIG. 1B) to obtain the zinc-vanadium battery 1b. For example, the modified positive electrode structure (comprising the positive electrode 10, the first modified layer 12, and the second modified layer 13), the separator 14, and the negative electrode 16 are assembled in sequence and packaged by a hydraulic press according to the specifications of a CR2032 button cell to obtain the final zinc-vanadium battery 1b. The implementations of the positive electrode 10, the first modified layer 12, the second modified layer 13, the separator 14, the negative electrode 16, and the aqueous electrolyte 18 may be referred to the above descriptions and will not be further described in detail herein. In some embodiments, the thickness of the positive electrode 10 is about 5-50 µm, the thickness of the first modified layer 12 is about 70-90 µm, the thickness of the second modified layer 13 is about 5-15 µm, the thickness of the separator 14 is about 30-400 µm, and the thickness of the negative electrode 16 is about 10-50 µm.

The following describes the ratios I₈/I₂₀ of unmodified and modified vanadium-based materials through X-ray diffraction patterns of Comparative Example 1 and Experimental Examples 1 and 2.

### Comparative Example 1: Unmodified vanadium-based material (I₈/I₂₀=0)

Material selection: vanadium oxide (V₂O₅), wherein the specifications of the vanadium oxide used in this Comparative Example 1 are as follows: CAS No. 1314-62-1; average particle size of 50 µm; purity of >99%; and the vanadium oxide having a peak at the position of 2θ=20°±1.0° without corresponding peak (i.e., I₈=0) at the position of 2θ=8°±1.0°, resulting in the ratio I₈/I₂₀=0.

### XRD measurement results: Unmodified vanadium-based material used in Comparative Example 1

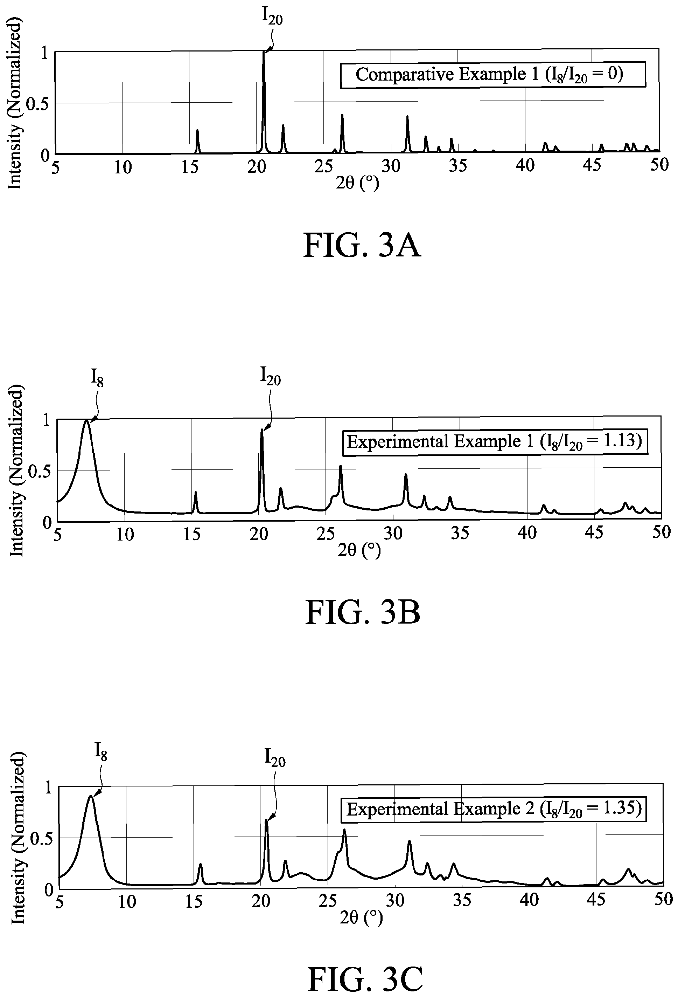

Please refer to FIG. 3A. FIG. 3A is an X-ray diffraction pattern of a vanadium-based material of Comparative Example 1 (known to the inventor) measured by an XRD using CuKα1 ray. It can be seen from the XRD measurement results of FIG. 3A that if hydrogen peroxide and water were not used to modify vanadium oxide (V₂O₅), the vanadium-based material still would not have a corresponding peak at the position of 2θ=8°±1.0° (i.e., I₈=0), resulting in I₈/I₂₀=0.

### Experimental Example 1: Modified vanadium-based material (I₈/I₂₀=1.13)

Material selection: vanadium oxide (V₂O₅), water, and hydrogen peroxide, sequentially in a weight proportion of 35 parts by weight, 600 parts by weight, and 10 parts by weight, wherein the specifications of the vanadium oxide used in this Experimental Example 1 are as follows: CAS No. 1314-62-1; average particle size of 50 µm; purity of >99%; and the vanadium oxide having a peak at the position of 2θ=20°±1.0° without corresponding peak (i.e., I₈=0) at the position of 2θ=8°±1.0°, resulting in the ratio I₈/I₂₀=0.

### Manufacturing method:

(1) mixing 35 parts by weight of vanadium oxide (V₂O₅), 600 parts by weight of water, and 60 parts by weight of hydrogen peroxide to conduct homogenization to obtain a vanadium-based homogeneous mixture; and
(2) freezing the vanadium-based homogeneous mixture to a frozen state, vacuuming the environment of the mixture, and heating the resulting mixture to 40°C for 12 hours or more (which was set to be 12 hours in this Example) to obtain a vanadium-based material in the form of a dry powder.

### XRD measurement results: Vanadium-based materials used in Experimental Example 1

Please refer to FIG. 3B. FIG. 3B is an X-ray diffraction pattern of a vanadium-based material of Experimental Example 1 (according to some embodiments of the instant disclosure) measured by an XRD using CuKα1 ray. It can be seen from the XRD measurement results of FIG. 3B that because the vanadium-based material used in Experimental Example 1 was a vanadium-based material obtained by modifying vanadium oxide (V₂O₅) at least through hydrogen peroxide and water, not only did a corresponding peak (I₂₀) appear at the position of 2θ=20°±1.0°, but a corresponding peak (I₈) also appeared at the position of 2θ=8°±1.0°. Accordingly, the ratio I₈/I₂₀ was calculated to be 1.13.

### Experimental Example 2: Modified vanadium-based material (I₈/I₂₀=1.35)

Material selection: identical to those of Experimental Example 1, which can be referred to the description in Experimental Example 1 and thus is not further described in detail herein.

Manufacturing method: identical to those of Experimental Example 1, which can be referred to the description in Experimental Example 1 and thus is not further described in detail herein.

### XRD measurement results: Vanadium-based materials used in Experimental Example 2

Please refer to FIG. 3C. FIG. 3C is an X-ray diffraction pattern of a vanadium-based material of Experimental Example 2 (according to some embodiments of the instant disclosure) measured by an XRD using CuKα1 ray. It can be seen from the XRD measurement results of FIG. 3C that, similarly to those of Experimental Example 1, because the vanadium-based material used in Experimental Example 2 was a vanadium-based material obtained by modifying vanadium oxide (V₂O₅) at least through hydrogen peroxide and water, not only did a corresponding peak (I₂₀) appear at the position of 2θ=20°±1.0°, but a corresponding peak (I₈) also appeared at the position of 2θ=8°±1.0°. Accordingly, the ratio I₈/I₂₀ was calculated to be 1.35.

Based on the XRD measurement results of the above Comparative Example 1 and Experimental Examples 1 and 2, it can be seen that only the X-ray diffraction patterns of Experimental Examples 1 and 2 (the vanadium-based materials thereof were the vanadium-based materials obtained by modifying vanadium oxide (V₂O₅) at least hydrogen peroxide and water) would have peaks at both the position of 2θ=8°±1.0° and the position of 2θ=20°±1.0°, and the two obtained peaks satisfied the peak intensity relationship of 0<I₈/I₂₀≤1.4, and also satisfied the peak intensity relationship of 1.1≤I₈/I₂₀≤1.4.

The following describes the manufacturing method of Comparative Example 2 and Experimental Examples 3-7, wherein the Comparative Example 2 represents the zinc-vanadium battery (known to the inventor, where the first modified layer 12 comprises the modified vanadium-based material (I₈/I₂₀=1.35)), and the Experimental Examples 3-7 represent the zinc-vanadium batteries 1a, 1b (according to some embodiments of the instant disclosure, where the first modified layer 12 comprises the modified vanadium-based material (I₈/I₂₀=1.35)), which are further compared in the following TABLE 1.

**TABLE 1**

| | **Comparative Example 2** | **Experimental Example 3** | **Experimental Example 4** | **Experimental Example 5** | **Experimental Example 6** | **Experimental Example7** |
|---|---|---|---|---|---|---|
| **Positive electrode** | Titanium foil | Aluminum foil covered by a carbon coating | | | | |
| **First modified layer** | Comprising vanadium-based material (I₈/I₂₀=1.35) | | | | | |
| **Second modified layer** | - | | | PEDOT | | |
| **Separator** | Glass fiber | Cellulose | Glass fiber | Cellulose | Cellulose | Cellulose |
| **Aqueous electrolyte** | Zn(OTf)₂ | ZnSO₄ | Zn(OTf)₂ | ZnSO₄ | ZnSO₄ | ZnSO₄ |
| | | | LiN(CF₃SO₂)₂ | | (NH₄)₂SO₄ | |
| **Negative electrode** | Zinc foil | | | | | |
| **Specification of battery** | CR2032 button cell | CR2032 button cell | CR2032 button cell | CR2032 button cell | CR2032 button cell | Soft-pack type battery |

The following describes the manufacturing method of Comparative Example 2 and Experimental Example 8, wherein the Comparative Example 2 represents the zinc-vanadium battery (known to the inventor, where the first modified layer 12 comprises the modified vanadium-based material (I₈/I₂₀=1.35)), and the Experimental Example 8 represents the zinc-vanadium batteries 1a (according to some embodiments of the instant disclosure, where the first modified layer 12 comprises the modified vanadium-based material (I₈/I₂₀=1.13)), which are further compared in the following TABLE 2.

**TABLE 2**

| | **Comparative Example 2** | **Experimental Example 8** |
|---|---|---|
| **Positive electrode** | Titanium foil | Aluminum foil covered by a carbon coating |
| **First modified layer** | Comprising vanadium-based material (I₈/I₂₀=1.35) | Comprising vanadium-based material (I₈/I₂₀=1.13) |
| **Second modified layer** | - | - |
| **Separator** | Glass fiber | Cellulose |
| **Aqueous electrolyte** | Zn(OTf)₂ | ZnSO₄ |
| **Negative electrode** | Zinc foil | |
| **Specification of battery** | CR2032 button cell | CR2032 button cell |

### Comparative Example 2: Zinc-vanadium battery using a titanium foil as a positive electrode

### Material selection:

(1) Positive electrode: comprising a titanium foil, with a thickness of about 50 µm.
(2) Vanadium-based homogeneous mixture: comprising vanadium oxide (V₂O₅), water, and hydrogen peroxide, sequentially in a weight proportion of 35 parts by weight, 600 parts by weight, and 10 parts by weight; and the specifications of the vanadium oxide used in this Comparative Example are as follows: CAS No. 1314-62-1; average particle size of 50 µm; purity of >99%; and the vanadium oxide having a peak at the position of 2θ=20°±1.0° without corresponding peak (i.e., I₈=0) at the position of 2θ=8°±1.0°, resulting in the ratio I₈/I₂₀=0;
(3) Modified layer: comprising vanadium-based material (obtained by drying the vanadium-based homogeneous mixture), conductive agent (conductive carbon black), binder (PVDF), and organic solvent (NMP), with a thickness of about 88 µm;
(4) Separator: comprising glass fiber, with a thickness of about 350 µm;
(5) Negative electrode: comprising a zinc foil, with a thickness of about 50 µm; and
(6) Aqueous electrolyte: comprising 2M Zn(OTf)₂ and water, sequentially in a weight ratio of 42.28 parts by weight and 57.72 parts by weight.

### Manufacturing method:

(1) mixing 35 parts by weight of vanadium oxide (V₂O₅), 600 parts by weight of water, and 60 parts by weight of hydrogen peroxide to conduct homogenization to obtain a vanadium-based material;
(2) freezing the vanadium-based homogeneous mixture to a frozen state, vacuuming the environment of the mixture, and heating the resulting mixture to 40°C for 12 hours or more (which was set to be 12 hours in this Comparative Example) to obtain a vanadium-based material in the form of a dry powder; and the XRD testing result of the vanadium-based material can be referred to the X-ray diffraction pattern shown in Experimental Example 2, i.e., I₈/I₂₀=1.35;
(3) mixing 80 parts by weight of the vanadium-based material, 10 parts by weight of a conductive agent, and 10 parts by weight of a binder in an organic solvent to conduct homogenization to obtain a modified material (without apparent agglomerated particles and a particle size of less than 60 µm);
(4) coating the modified material on a titanium foil used as a positive electrode by using a frame coating member, and drying the positive electrode and the modified material at 100°C for 1 hour to obtain a modified layer;
(5) assembling the positive electrode, the modified layer, a separator, and a negative electrode with each other, and immersing the assembled structure in an aqueous electrolyte; and
(6) packaging the assembled structure immersed in the aqueous electrolyte in accordance to the specifications of the CR2032 button battery by using a hydraulic press to obtain a zinc-vanadium battery as the Comparative Example 2.
   (It is noted that, the zinc-vanadium battery of Comparative Example 2 had a battery structure similar to that of the zinc-vanadium battery 1a shown in FIG. 1A, and the main difference between the two zinc-vanadium batteries was the material selection of each layer and the aqueous electrolyte.)

### Experimental Example 3: Zinc-vanadium battery 1a using an aluminum foil covered by a carbon coating as a positive electrode 10 according to some embodiments of the instant disclosure

### Material selection:

(1) Positive electrode 10: comprising an aluminum foil covered by a carbon coating, with a thickness of about 50 µm; the thickness of the carbon coating on the aluminum foil was about 1-5 µm (the thickness of the carbon coating on the aluminum foil was set about 1.5 µm in this Example);
(2) Vanadium-based homogeneous mixture: comprising vanadium oxide (V₂O₅), water, and hydrogen peroxide, sequentially in a weight proportion of 35 parts by weight, 600 parts by weight, and 10 parts by weight; and the specifications of the vanadium oxide used in this Example are as follows: CAS No. 1314-62-1; average particle size of 50 µm; purity of >99%; and the vanadium oxide having a peak at the position of 2θ=20°±1.0° without corresponding peak (i.e., I₈=0) at the position of 2θ=8°±1.0°, resulting in the ratio I₈/I₂₀=0;
(3) First modified layer 12: comprising vanadium-based material (obtained by drying the vanadium-based homogeneous mixture), conductive agent (conductive carbon black), binder (PVDF), and organic solvent (NMP), with a thickness of about 88 µm;
(4) Separator 14: comprising cellulose, with a thickness of about 50 µm;
(5) Negative electrode 16: comprising a zinc foil, with a thickness of about 50 µm; and
(6) Aqueous electrolyte 18: comprising 0.5-3M ZnSO₄ (which was set to be 2M ZnSO₄ in this Example) and water, sequentially in a weight ratio of 42.28 parts by weight and 57.72 parts by weight.

### Manufacturing method:

(1) mixing 35 parts by weight of vanadium oxide (V₂O₅), 600 parts by weight of water, and 60 parts by weight of hydrogen peroxide to conduct homogenization to obtain a vanadium-based homogeneous mixture;
(2) freezing the vanadium-based homogeneous mixture to a frozen state, vacuuming the environment of the mixture, and heating the resulting mixture to 40°C for 12 hours or more (which was set to be 12 hours in this Example) to obtain a vanadium-based material in the form of a dry powder; and the XRD testing result of the vanadium-based material can be referred to the X-ray diffraction pattern shown in Experimental Example 2, i.e., I₈/I₂₀=1.35;
(3) mixing 80 parts by weight of the vanadium-based material, 10 parts by weight of a conductive agent, and 10 parts by weight of a binder in an organic solvent to conduct homogenization to obtain a first modified material (without apparent agglomerated particles and a particle size of less than 60 µm);
(4) coating the first modified material on an aluminum foil covered by a carbon coating used as a positive electrode 10 by using a frame coating member, and drying the positive electrode 10 and the first modified material at 100°C for 1 hour to obtain a first modified layer 12;
(5) assembling the positive electrode 10, the first modified layer 12, a separator 14, and a negative electrode 16 with each other, and immersing the assembled structure in an aqueous electrolyte 18;
(6) packaging the assembled structure immersed in the aqueous electrolyte 18 in accordance to the specifications of the CR2032 button battery by using a hydraulic press to obtain a zinc-vanadium battery 1a as the Experimental Example 3.

### Experimental Example 4: Zinc-vanadium battery 1a using an aluminum foil covered by a carbon coating as a positive electrode 10 according to some embodiments of the instant disclosure

### Material selection:

(1) Positive electrode 10, vanadium-based homogeneous mixture, first modified layer 12, and negative electrode 16: the same as the above-mentioned Experimental Example 3, which can be referred to the description of Experimental Example 3 and thus will not be further described in detail herein;
(2) Separator 14: comprising glass fiber, with a thickness of about 350 µm; and
(3) Aqueous electrolyte 18: comprising water, 1-5M Zn(OTf)₂ (which was set to be 2M Zn(OTf)₂ in this Example) and 0.1-1M LiN(CF₃SO₂)₂ (which was set to be 0.125M LiN(CF₃SO₂)₂ in this Example), sequentially in a weight ratio of 57.72 parts by weight, 42.28 parts by weight, and 1.98 parts by weight.

Manufacturing method: the same as the above-mentioned Experimental Example 3, which can be referred to the description of Experimental Example 3 and thus will not be further described in detail herein. Accordingly, a zinc-vanadium battery 1a as the Experimental Example 4 was obtained.

### Experimental Example 5: Zinc-vanadium battery 1b using an aluminum foil covered by a carbon coating as a positive electrode 10 according to some embodiments of the instant disclosure

### Material selection:

(1) Positive electrode 10, vanadium-based homogeneous mixture, first modified layer 12, separator 14, negative electrode 16, and aqueous electrolyte 18: the same as the above-mentioned Experimental Example 3, which can be referred to the description of Experimental Example 3 and thus will not be further described in detail herein; and
(2) Second modified layer 13: comprising PEDOT, with a thickness of about 10 µm.

### Manufacturing method:

(1) mixing 35 parts by weight of vanadium oxide (V₂O₅), 600 parts by weight of water, and 60 parts by weight of hydrogen peroxide to conduct homogenization to obtain a vanadium-based homogeneous mixture;
(2) freezing the vanadium-based homogeneous mixture to a frozen state, vacuuming the environment of the mixture, and heating the resulting mixture to 40°C for 12 hours or more (which was set to be 12 hours in this Example) to obtain a vanadium-based material in the form of a dry powder; and the XRD testing result of the vanadium-based material can be referred to the X-ray diffraction pattern shown in Experimental Example 2, i.e., I₈/I₂₀=1.35;
(3) mixing 80 parts by weight of the vanadium-based material, 10 parts by weight of a conductive agent, and 10 parts by weight of a binder in an organic solvent to conduct homogenization to obtain a first modified material (without apparent agglomerated particles and a particle size of less than 60 µm);
(4) coating the first modified material on an aluminum foil covered by a carbon coating used as a positive electrode 10 by using a frame coating member, and drying the titanium foil and the first modified material at 100°C for 1 hour to obtain a first modified layer 12;
(5) coating the second modified material on the first modified layer 12 by using a frame coating member, and drying the positive electrode 10, the first modified layer 12, and the second modified material at 100°C for 1 hour to obtain a second modified layer 13;
(6) assembling the positive electrode 10, the first modified layer 12, the second modified layer 13, a separator 14, and a negative electrode 16 with each other, and immersing the assembled structure in an aqueous electrolyte 18;
(7) packaging the assembled structure immersed in the aqueous electrolyte 18 in accordance to the specifications of the CR2032 button battery by using a hydraulic press to obtain a zinc-vanadium battery 1b as the Experimental Example 5.

### Experimental Example 6: Zinc-vanadium battery 1b using an aluminum foil covered by a carbon coating as a positive electrode 10 according to some embodiments of the instant disclosure

### Material selection:

(1) Positive electrode 10, vanadium-based homogeneous mixture, first modified layer 12, second modified layer 13, separator 14, and negative electrode 16: the same as the above-mentioned Experimental Example 3, which can be referred to the description of Experimental Example 3 and thus will not be further described in detail herein; and
(2) Aqueous electrolyte 18: comprising water, 1-5M ZnSO₄ (which was set to be 2M ZnSO₄ in this Example) and 0.1-0.3M (NH₄)₂SO₄ (which was set to be 0.25M (NH₄)₂SO₄ in this Example), sequentially in a weight ratio of 57.72 parts by weight, 42.28 parts by weight, and 2.05 parts by weight.

Manufacturing method: the same as the above-mentioned Experimental Example 5, which can be referred to the description of Experimental Example 5 and thus will not be further described in detail herein. Accordingly, a zinc-vanadium battery 1b as the Experimental Example 6 was obtained.

### Experimental Example 7: Zinc-vanadium battery 1b using an aluminum foil covered by a carbon coating as a positive electrode 10 according to some embodiments of the instant disclosure

Material selection: the same as the above-mentioned Experimental Example 5, which can be referred to the description of Experimental Example 5 and thus will not be further described in detail herein.

Manufacturing method: generally the same as the above-mentioned Experimental Example 5, and the main difference was, for example, that after assembling the positive electrode 10, the first modified layer 12, the second modified layer 13, the separator 14, and the negative electrode 16 and immersing the assembled structure in the aqueous electrolyte 18, the assembled structure was packaged in a soft-pack type battery to obtain the zinc-vanadium battery 1b of Experimental Example 7.

The following Testing Examples 1 and 2 are used to illustrate the battery discharge capacity and average service life of Comparative Example 2 and Experimental Examples 3-8, respectively.

### Testing Example 1: Battery discharge capacity

### Test method:

The battery test method used in this Testing Example was a constant current charge and discharge test. Each tested battery was discharged through a charger and discharger at a preset constant current (usually referred to as current density, with the weight of the electrode reactants as the reference value, and the current density could be set to be 100 mA/g or 200 mA/g (which was set to be 200 mA/g in this Testing Example)), and the time of the discharge process and the total power were recorded. The product of the time and the total charge capacity was then divided by the weight of the positive electrode to give the battery's gram capacity in milliampere-hours per gram (mAh/g).

### Test results:

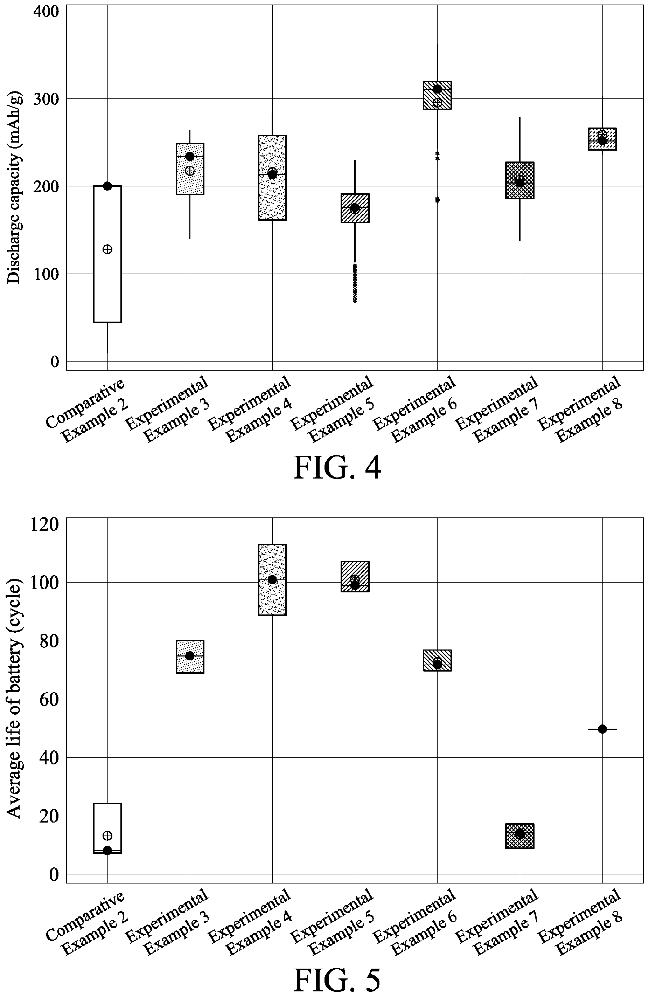

Please refer to the following TABLE 3 and FIG. 4. FIG. 4 is a graph comparing discharge capacities of a zinc-vanadium battery comprising the vanadium-based material of Comparative Example 2 (using a zinc foil as the positive electrode) and zinc-vanadium batteries 1a, 1b comprising the vanadium-based material of Experimental Examples 3-8 (using an aluminum foil covered by a carbon coating as the positive electrode 10). It can be seen from the test results of the battery discharge capacities shown in TABLE 3 and FIG. 4 that the average discharge capacities of the batteries of Experimental Examples 3-6 were about 217 mAh/g, 213 mAh/g, 175 mAh/g, and 295 mAh/g, respectively. Compared with the average discharge capacity of the battery of Comparative Example 2 (i.e., about 127 mAh/g), the average discharge capacities of the batteries of Experimental Examples 3-6 were increased by about 70.9%, 67.7%, 37.8%, and 132.3%, respectively. In other words, the positive electrodes 10 of the zinc-vanadium batteries 1a, 1b of Experimental Examples 3-6 used aluminum foils covered by a carbon coating, and the first modified layers 12 of the zinc-vanadium batteries 1a, 1b of Experimental Examples 3-6 included modified vanadium-based materials with the help of different combinations of the second modified layers 13 and the aqueous electrolytes 18; therefore, the average battery discharge capacities according to some embodiments can be greatly improved.

**TABLE 3: Battery discharge capacity**

| | **Positive electrode** | **First modified layer** | **Second modified layer** | **Aqueous electrolyte** | **Average battery discharge capacity (mAh/g)** |
|---|---|---|---|---|---|
| **Comparative Example 2** | Titanium foil | Comprising vanadium-based material (I₈/I₂₀=1.35) | - | Zn(OTf)₂ | 127 |
| **Experimental Example 3** | Aluminum foil covered by a carbon coating | | | ZnSO₄ | 217 |
| **Experimental Example 4** | | | | Zn(OTf)₂ | 213 |
| | | | | LiN(CF₃SO₂)₂ | |
| **Experimental Example 5** | | | PEDOT | ZnSO₄ | 175 |
| **Experimental Example 6** | | | | ZnSO₄ | 295 |
| | | | | (NH₄)₂SO₄ | |
| **Experimental Example 7** | | | | ZnSO₄ | 203 |
| **Experimental Example 8** | | Comprising vanadium-based material (I₈/I₂₀= 1.13) | - | ZnSO₄ | 258 |

In addition, it can also be seen from the test results of the battery discharge capacities shown in TABLE 3 and FIG. 4 that the average discharge capacity of the battery of Experimental Example 7, which was packaged as a soft-pack type battery (as shown in TABLE 1), was as high as 203 mAh/g. Compared with the average discharge capacity of the battery of Comparative Example 2 (i.e., about 127 mAh/g), the average discharge capacity of the battery of Experimental Example 7 was increased by about 59.8%. In other words, even if the zinc-vanadium battery 1b of Experimental Example 7 was packaged as a soft-pack type battery, as long as the positive electrode 10 of the zinc-vanadium battery 1b used aluminum foils covered by a carbon coating, and the first modified layer 12 of the zinc-vanadium battery 1b included modified vanadium-based material with the help of the combination of the second modified layer 13 and the aqueous electrolyte 18, the average battery discharge capacity according to some embodiments can also be greatly improved.

Furthermore, compared with the average battery discharge capacity of Experimental Example 5 that was packaged as a button cell (which also included the second modified layer 13 and used the same aqueous electrolyte 18; about 175 mAh/g), even if the zinc-vanadium battery 1b of Experimental Example 7 was packaged as a soft-pack type battery, the average battery discharge capacity of the zinc-vanadium battery 1b of Experimental Example 7 can also be increased by about 16%, thereby showing an excellent average battery discharge capacity.

Moreover, it can be seen from the test results of the battery discharge capacities shown in TABLE 3 and FIG. 4 that the average discharge capacities of the batteries of Experimental Example 3 (which used the first modified layer 12 comprising the vanadium-based material with I₈/I₂₀=1.35) and Experimental Example 8 (which used the first modified layer 12 comprising the vanadium-based material with I₈/I₂₀=1.13) were about 217 mAh/g and 258 mAh/g, respectively. Compared with the average discharge capacity of the battery of Comparative Example 2 (i.e., about 127 mAh/g), the average discharge capacities of the batteries of Experimental Examples 3 and 8 were increased by about 70.9% and 103.1%, respectively. In other words, the positive electrodes 10 of the zinc-vanadium batteries 1a of Experimental Examples 3 and 8 used aluminum foils covered by a carbon coating, and the first modified layers 12 of the zinc-vanadium batteries 1a of Experimental Examples 3 and 8 included modified vanadium-based materials with each ratio I₈/I₂₀ being 1.35 and 1.13 and with the help of the combinations of the second modified layers 13 and the aqueous electrolytes 18, and thus the average battery discharge capacities according to some embodiments can be greatly improved. Therefore, in some embodiments, the zinc-vanadium battery 1a comprising a vanadium-based material with a ratio I₈/I₂₀ falling at least within a range between 1.13 and 1.35 (i.e., 1.1≤I₈/I₂₀≤1.4) can indeed have a greatly improved average battery discharge capacity.

### Testing Example 2: Average service life of battery

### Test method:

In this Testing Example, the battery operating voltage range might be set between 0.2 V and 2.0 V (which was set to be 2.0 V in this Testing Example) through a charger and discharger, and the batteries of Comparative Example 2 and Experimental Examples 3-7 were continuously charged at least 30 times at a fixed current density of 100 mA/g or 200 mA/g (which was set to be 200 mA/g in this Testing Example) to test the average service life of the batteries, while Experimental Example 8 was charged at least once at a fixed current density of 100 mA/g or 200 mA/g (which was set to be 200 mA/g in this Testing Example) to test the average service life of the battery.

### Test results:

Please refer to TABLE 4 and FIG. 5. FIG. 5 is a graph comparing average service life of batteries of a zinc-vanadium battery comprising the vanadium-based material of Comparative Example 2 (using a zinc foil as the positive electrode) and zinc-vanadium batteries 1a, 1b comprising the vanadium-based material of Experimental Examples 3-8 (using an aluminum foil covered by a carbon coating as the positive electrode 10). It can be seen from the test results of the average service life of batteries shown in TABLE 4 and FIG. 5 that the average service life of batteries of Experimental Examples 3-6 were about 75 cycles, 101 cycles, 101 cycles, and 73 cycles, respectively. Compared with the average service life of battery of Comparative Example 2 (i.e., about 14 cycles), the average service life of batteries of Experimental Examples 3-6 were increased by about 435.7%, 621.4%, 621.4%, and 421.4%, respectively. In other words, the positive electrodes 10 of the zinc-vanadium batteries 1a, 1b of Experimental Examples 3-6 used aluminum foils covered by a carbon coating, and the first modified layers 12 of the zinc-vanadium batteries 1a, 1b of Experimental Examples 3-6 included modified vanadium-based materials with the help of different combinations of the second modified layers 13 and the aqueous electrolytes 18; therefore, the average service life of batteries according to some embodiments can also be greatly improved.

**TABLE 4: Average service life of battery**

| | **Positive electrode** | **First modified layer** | **Second modified layer** | **Aqueous electrolyte** | **Average service life of battery (cycles)** |
|---|---|---|---|---|---|
| **Comparative Example 2** | Titanium foil | Comprising vanadium-based material (I₈/I₂₀=1.35) | - | Zn(OTf)₂ | 14 |
| **Experimental Example 3** | Aluminum foil covered by a carbon coating | | | ZnSO₄ | 75 |
| **Experimental Example 4** | | | | Zn(OTf)₂ | 101 |
| | | | | LiN(CF₃SO₂)₂ | |
| **Experimental Example 5** | | | PEDOT | ZnSO₄ | 101 |
| **Experimental Example 6** | | | | ZnSO₄ | 73 |
| | | | | (NH₄)₂SO₄ | |
| **Experimental Example 7** | | | | ZnSO₄ | 15 |
| **Experimental Example 8** | | Comprising vanadium-based material (I₈/I₂₀= 1.13) | - | ZnSO₄ | 51 |

In addition, it can also be seen from the test results of the average service life of battery shown in TABLE 4 and FIG. 5 that the average service life of battery of Experimental Example 7, which was packaged as a soft-pack type battery (as shown in TABLE 1), was 15 cycles. Compared with the average service life of battery of Comparative Example 2 (i.e., about 14 cycles), the average service life of battery of Experimental Example 7 was increased by about 7.1%. In other words, even if the zinc-vanadium battery 1b of Experimental Example 7 was packaged as a soft-pack type battery, as long as the positive electrode 10 of the zinc-vanadium battery 1b used aluminum foils covered by a carbon coating, and the first modified layer 12 of the zinc-vanadium battery 1b included modified vanadium-based material with the help of the combination of the second modified layer 13 and the aqueous electrolyte 18, the average service life of battery according to some embodiments can also be greatly improved.

Moreover, it can be seen from the test results of the average service life of batteries shown in TABLE 4 and FIG. 5 that the average service life of battery of Experimental Example 3 (which used the first modified layer 12 comprising the vanadium-based material with I₈/I₂₀=1.35) and Experimental Example 8 (which used the first modified layer 12 comprising the vanadium-based material with I₈/I₂₀=1.13) were about 75 cycles and 51 cycles, respectively. Compared with the average service life of battery of Comparative Example 2 (i.e., about 127 mAh/g), the average service life of batteries of Experimental Examples 3 and 8 were increased by about 435.7% and 264.3%, respectively. In other words, the positive electrodes 10 of the zinc-vanadium batteries 1a of Experimental Examples 3 and 8 used aluminum foils covered by a carbon coating, and the first modified layers 12 of the zinc-vanadium batteries 1a of Experimental Examples 3 and 8 included modified vanadium-based materials with each ratio I₈/I₂₀ being 1.35 and 1.13 and with the help of the combinations of the second modified layers 13 and the aqueous electrolytes 18, and thus the average service life of batteries according to some embodiments can be greatly improved. Therefore, in some embodiments, the zinc-vanadium battery 1a comprising a vanadium-based material with a ratio I₈/I₂₀ falling at least within a range between 1.13 and 1.35 (i.e., 1.1≤I₈/I₂₀≤1.4) can indeed have a greatly improved average service life of battery.

To sum up, a modified positive electrode structure according to some embodiments comprises a vanadium-based material obtained by modifying vanadium oxide through hydrogen peroxide and water. As compared with traditional zinc-vanadium batteries that do not comprise such modified vanadium-based materials, in some embodiments, a zinc-vanadium battery comprising such a modified positive electrode structure (i.e., a zinc-vanadium battery comprising the first modified layer comprising modified vanadium-based material; or further comprising the second modified layer) with the help of the combination of the second modified layer and the aqueous electrolyte can have greatly improved average battery discharge capacity and average service life of battery can have greatly improved average battery discharge capacity of a zinc-vanadium battery and average service life of the battery. Furthermore, since the modified positive electrode structure is used as a positive electrode in a zinc-vanadium battery, the solution provided by some embodiments is distinct from the currently-common method of adjusting the aqueous electrolyte, and can still produce a greatly improvement in the average battery discharge capacity and average service life of battery.

## Claims

1. A modified positive electrode structure, comprising:
a positive electrode (10) comprising aluminum covered by a carbon coating; and
a first modified layer (12) on the positive electrode (10), wherein the first modified layer (12) comprises:
a vanadium-based material, 70-95 parts by weight;
a conductive agent, 3-45 parts by weight; and
a binder, 3-45 parts by weight;
wherein in an X-ray diffraction pattern of the vanadium-based material measured by an X-ray diffractometer (XRD) using CuKα1 ray, with an intensity of a peak at 2θ=8°±1.0° denoted as I₈ and an intensity of a peak at 2θ=20°±1.0° denoted as I₂₀, a ratio of I₈ over I₂₀ (I₈/I₂₀) satisfies 0<I₈/I₂₀≤ 1.4.

2. The modified positive electrode structure according to claim 1, further comprising a second modified layer (13) on the first modified layer (12), wherein the second modified layer (13) comprises at least one selected from the group consisting of poly(3,4-ethylenedioxythiophene) (PEDOT) and polyaniline (PANI).

3. The modified positive electrode structure according to any one of claims 1-2, wherein the ratio of I₈ over I₂₀ (I₈/I₂₀) satisfies 1.1≤I₈/I₂₀≤1.4.

4. The modified positive electrode structure according to any one of claims 1-3, wherein the conductive agent comprises at least one selected from the group consisting of conductive carbon black and carbon nanotube.

5. The modified positive electrode structure according to any one of claims 1-4, wherein the binder comprises at least one selected from the group consisting of polyvinylidene fluoride (PVDF), polytetrafluoroethylene (PTFE), carboxymethyl cellulose (CMC), styrene-butadiene rubber (SBR), and polyimide.

6. A method of manufacturing the modified positive electrode structure according to claim 1, comprising:
a first homogenization step (S20) comprising mixing vanadium oxide, water, and hydrogen peroxide to conduct homogenization to obtain a vanadium-based homogeneous mixture;
a drying step (S21) comprising freeze-drying or heat-drying the vanadium-based homogeneous mixture to obtain the vanadium-based material;
a second homogenization step (S22) comprising mixing the vanadium-based material, the conductive agent, and the binder to conduct homogenization to obtain a first modified material; and
a coating step (S23) comprising coating the first modified material onto the positive electrode (10) to form the first modified layer (12) on the positive electrode (10).

7. The method according to claim 6, wherein:
the first homogenization step (S20) comprises at room temperature and pressure, homogenizing the vanadium oxide, the water, and the hydrogen peroxide in a weight ratio of 7:120:2-12 in sequence to obtain the vanadium-based homogeneous mixture; and
the second homogenization step (S22) comprises at room temperature and pressure, homogenizing the vanadium-based material, the conductive agent, and the binder in a weight ratio of 70-95:3-45:3-45 in sequence to obtain the first modified material.

8. A method of manufacturing the modified positive electrode structure according to claim 2, comprising:
a first homogenization step (S20) comprising mixing vanadium oxide, water, and hydrogen peroxide to conduct homogenization to obtain a vanadium-based homogeneous mixture;
a drying step (S21) comprising freeze-drying or heat-drying the vanadium-based homogeneous mixture to obtain the vanadium-based material;
a second homogenization step (S22) comprising mixing the vanadium-based material, the conductive agent, and the binder to conduct homogenization to obtain a first modified material;
a first coating step (S23) comprising coating the first modified material onto the positive electrode to form the first modified layer (12) on the positive electrode (10); and
a second coating step (S24) comprising coating a second modified material onto the first modified layer (12) to form the second modified layer (13) on the first modified layer (12), wherein the second modified material comprises at least one selected from the group consisting of PEDOT and PANI.

9. The method according to claim 8, wherein:
the first homogenization step (S20) comprises at room temperature and pressure, homogenizing the vanadium oxide, the water, and the hydrogen peroxide in a weight ratio of 7:120:2-12 in sequence to obtain the vanadium-based homogeneous mixture; and
the second homogenization step (S22) comprises at room temperature and pressure, homogenizing the vanadium-based material, the conductive agent, and the binder in a weight ratio of 70-95:3-45:3-45 in sequence to obtain the first modified material.

10. A zinc-vanadium battery (1a), comprising:
a positive electrode (10) comprising aluminum covered by a carbon coating; and
a first modified layer (12) on the positive electrode (10), wherein the first modified layer (12) comprises:
a vanadium-based material, 70-95 parts by weight;
a conductive agent, 3-45 parts by weight; and
a binder, 3-45 parts by weight;
a separator (14) on the first modified layer (12);
a negative electrode (16) comprising zinc and on the separator (14); and
an aqueous electrolyte (18), wherein the positive electrode (10), the first modified layer (12), the separator (14), and the negative electrode (16) are in the aqueous electrolyte (18);
wherein in an X-ray diffraction pattern of the vanadium-based material measured by an X-ray diffractometer (XRD) using CuKα1 ray, with an intensity of a peak at 2θ=8°±1.0° denoted as I₈ and an intensity of a peak at 2θ=20°±1.0° denoted as I₂₀, a ratio of I₈ over I₂₀ (I₈/I₂₀) satisfies 0<I₈/I₂₀≤ 1.4.

11. The zinc-vanadium battery (1b) according to claim 10, further comprising a second modified layer (13) on the first modified layer (12), wherein the second modified layer (13) comprises at least one selected from the group consisting of poly(3,4-ethylenedioxythiophene) (PEDOT) and polyaniline (PANI), wherein the separator (14) is on the second modified layer (13), and the positive electrode (10), the first modified layer (12), the second modified layer (13), the separator (14), and the negative electrode (16) are in the aqueous electrolyte (18).

12. The zinc-vanadium battery (1a, 1b) according to any one of claims 10-11, wherein the ratio of I₈ over I₂₀ (I₈/I₂₀) satisfies 1.1≤I₈/I₂₀≤1.4.

13. The zinc-vanadium battery (1a, 1b) according to any one of claims 10-12, wherein the aqueous electrolyte (18) is an aqueous solution comprising at least one selected from the group consisting of zinc sulfate (ZnSO₄) and zinc triflate (Zn(OTf)₂).

14. The zinc-vanadium battery (1a, 1b) according to any one of claims 10-12, wherein the aqueous electrolyte (18) comprises water, Zn(OTf)₂, and lithium bis(trifluoromethanesulfonyl)imide (LiN(CF₃SO₂)₂).

15. The zinc-vanadium battery (1a, 1b) according to claim 14, wherein and a weight ratio of water, Zn(OTf)₂, and LiN(CF₃SO₂)₂ is 1.4:1:0.01-0.28.

16. The zinc-vanadium battery (1a, 1b) according to any one of claims 10-12, wherein the aqueous electrolyte (18) comprises water, zinc sulfate (ZnSO₄), and ammonium sulfate ((NH₄)₂SO₄).

17. The zinc-vanadium battery (1a, 1b) according to claim 16, wherein and a weight ratio of the water, ZnSO₄, and (NH₄)₂SO₄ is 1.4:1:0.02-0.17.

18. The zinc-vanadium battery (1a, 1b) according to any one of claims 10-17, wherein the conductive agent comprises at least one selected from the group consisting of conductive carbon black and carbon nanotube.

19. The zinc-vanadium battery (1a, 1b) according to any one of claims 10-18, wherein the binder comprises at least one selected from the group consisting of polyvinylidene fluoride (PVDF), polytetrafluoroethylene (PTFE), carboxymethyl cellulose (CMC), styrene-butadiene rubber (SBR), and polyimide.

20. The zinc-vanadium battery (1a, 1b) according to any one of claims 10-19, wherein the separator (14) comprises one selected from the group consisting of cellulose and glass fiber.

21. A method (2a) of manufacturing the zinc-vanadium battery (1a) according to claim 10, comprising:
a first homogenization step (S20) comprising mixing vanadium oxide, water, and hydrogen peroxide to conduct homogenization to obtain a vanadium-based homogeneous mixture;
a drying step (S21) comprising freeze-drying or heat-drying the vanadium-based homogeneous mixture to obtain the vanadium-based material;
a second homogenization step (S22) comprising mixing the vanadium-based material, the conductive agent, and the binder to conduct homogenization to obtain a first modified material;
a coating step (S23) comprising coating the first modified material onto the positive electrode (10) to form the first modified layer (12) on the positive electrode (10); and
an assembling step (S25a) comprising sequentially assembling the separator (14) and the negative electrode (16) on the first modified layer (12) and immersing the positive electrode (10), the first modified layer (12), the separator (14), and the negative electrode (16) in the aqueous electrolyte (18) to obtain the zinc-vanadium battery (1a).

22. The method (2a) according to claim 21, wherein:
the first homogenization step (S20) comprises at room temperature and pressure, homogenizing the vanadium oxide, the water, and the hydrogen peroxide in a weight ratio of 7:120:2-12 in sequence to obtain the vanadium-based homogeneous mixture; and
the second homogenization step (S22) comprises at room temperature and pressure, homogenizing the vanadium-based material, the conductive agent, and the binder in a weight ratio of 70-95:3-45:3-45 in sequence to obtain the first modified material.

23. A method (2b) of manufacturing the zinc-vanadium battery (1b) according to claim 11, comprising:
a first homogenization step (S20) comprising mixing vanadium oxide, water, and hydrogen peroxide to conduct homogenization to obtain a vanadium-based homogeneous mixture;
a drying step (S21) comprising freeze-drying or heat-drying the vanadium-based homogeneous mixture to obtain the vanadium-based material;
a second homogenization step (S22) comprising mixing the vanadium-based material, the conductive agent, and the binder to conduct homogenization to obtain a first modified material;
a first coating step (S23) comprising coating the first modified material onto the positive electrode (10) to form the first modified layer (12) on the positive electrode (10);
a second coating step (S24) comprising coating a second modified material onto the first modified layer (12) to form the second modified layer (13) on the first modified layer (12), wherein the second modified material comprises at least one selected from the group consisting of PEDOT and PANI; and
an assembling step (S25b) comprising sequentially assembling the separator (14) and the negative electrode (16) on the second modified layer (13) and immersing the positive electrode (10), the first modified layer (12), the second modified layer (13), the separator (14), and the negative electrode (16) in the aqueous electrolyte (18) to obtain the zinc-vanadium battery (1b).

24. The method (2b) according to claim 23, wherein:
the first homogenization step (S20) comprises at room temperature and pressure, homogenizing the vanadium oxide, the water, and the hydrogen peroxide in a weight ratio of 7:120:2-12 in sequence to obtain the vanadium-based homogeneous mixture; and
the second homogenization step (S22) comprises at room temperature and pressure, homogenizing the vanadium-based material, the conductive agent, and the binder in a weight ratio of 70-95:3-45:3-45 in sequence to obtain the first modified material.
